(19) Europäisches Patentamt / European Patent Office / Office européen des brevets

(11) **EP 2 460 143 B1**

(12) **FASCICULE DE BREVET EUROPEEN**

(45) Date de publication et mention de la délivrance du brevet:
**02.07.2014 Bulletin 2014/27**

(21) Numéro de dépôt: **10737065.2**

(22) Date de dépôt: **28.07.2010**

(51) Int Cl.:
*G06T 7/00* *(2006.01)*        *G01C 21/16* *(2006.01)*

(86) Numéro de dépôt international:
**PCT/EP2010/060988**

(87) Numéro de publication internationale:
**WO 2011/012663 (03.02.2011 Gazette 2011/05)**

(54) **PROCÉDÉ D'ESTIMATION DE DÉCALAGES D'IMAGES LIGNES OBTENUES PAR UN CAPTEUR À DÉFILEMENT SPATIAL OU AÉROPORTÉ**

VERFAHREN ZUR ERKENNUNG VON VERSCHIEBUNGEN BEI LINIENBILDERN VON EINEM SENSOR IN DER LUFT ODER IM RAUM

METHOD FOR DETECTING SHIFTS IN LINE IMAGES OBTAINED BY A SENSOR THAT IS AIRBORNE OR MOVING IN SPACE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **31.07.2009 FR 0955396**

(43) Date de publication de la demande:
**06.06.2012 Bulletin 2012/23**

(73) Titulaire: **Astrium SAS**
**92150 Suresnes (FR)**

(72) Inventeurs:
• **FRAISSE, Renaud**
**F-31500 Toulouse (FR)**
• **CROMBEZ, Vincent**
**F-31120 Lacroix-falgarde (FR)**

(74) Mandataire: **Fourcade, Emmanuelle et al**
**SCHMIT CHRETIEN**
**Parc de Basso Cambo**
**4, rue Paul Mesplé**
**31100 Toulouse (FR)**

(56) Documents cités:
**US-A1- 2008 031 528**

• **TCHERNYKH V ET AL: "Airborne test results for smart pushbroom imaging system with optoelectronic image correction" PROCEEDINGS OF THE SPIE - THE INTERNATIONAL SOCIETY FOR OPTICAL ENGINEERING, SPIE, US, vol. 5234, no. 1, 1 janvier 2004 (2004-01-01), pages 550-559, XP002520674 ISSN: 0277-786X**

**Description**

La présente invention appartient au domaine de l'exploitation d'images obtenues par un capteur à défilement embarqué à bord d'un véhicule survolant un corps céleste. Plus particulièrement, la présente invention concerne un procédé d'estimation de décalages d'images lignes représentant des portions différentes d'une scène à la surface du corps céleste.

Un capteur à défilement (connu sous le nom de « push broom » dans la littérature anglo-saxonne) comporte généralement une pluralité de cellules sensibles agencées en ligne. La ligne de visée du capteur est dirigée vers la surface du corps céleste observé, par exemple la Terre, et forme avec la ligne de cellules sensibles un plan, dit « plan de visée ».

En faisant défiler le plan de visée du capteur sur une scène à la surface de la Terre, on acquiert successivement des images lignes correspondant à des portions différentes de la scène, comportant une pluralité de pixels produits par les différentes cellules sensibles du capteur. Les images lignes sont destinées à être juxtaposées, de sorte à former une image, dite « image composée », représentant tout ou partie de la scène.

Par juxtaposition, on entend l'opération qui consiste à former une image composée constituée d'une matrice de pixels à deux dimensions à partir d'images lignes acquises successivement de sorte que les lignes de la matrice de pixels de l'image composée correspondent aux images lignes successives, et les colonnes de l'image composée sont par définition composées de tous les pixels de même indice des différentes images lignes.

Le défilement du plan de visée du capteur s'effectue par exemple par déplacement du véhicule par rapport à la Terre, auquel cas le capteur est généralement immobile dans un repère associé au véhicule et est agencé transversalement à la trajectoire dudit véhicule par rapport à la Terre, de préférence perpendiculairement à ladite trajectoire s'il s'agit de maximiser la fauchée de l'instrument.

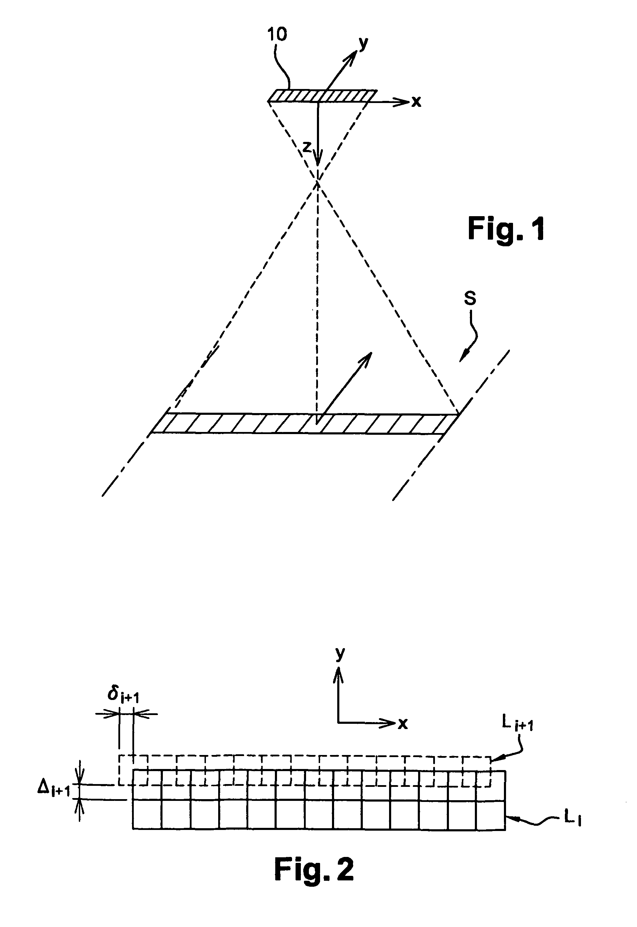

La figure 1 représente schématiquement en perspective le survol d'une scène par un capteur 10 à défilement.

On associe au capteur 10 un repère comportant trois axes X, Y et Z, orthogonaux entre eux, dans lequel l'axe X est parallèle à l'axe de la ligne de cellules sensibles du capteur 10, l'axe Y est parallèle à la direction de déplacement dudit capteur, et l'axe Z est orienté vers la Terre, et forme avec la ligne de visée dudit capteur un angle de valeur connue, éventuellement nulle, en l'absence de vibrations.

En général, l'acquisition des images lignes par le capteur est simultanée pour chaque cellule sensible et avec une période d'échantillonnage entre deux acquisitions consécutives sensiblement constante.

Ainsi, au cours d'une séquence d'observation, les images lignes successives représentent des portions successives différentes de la scène observée, sensiblement alignées les unes par rapport aux autres et espacées les unes des autres d'un intervalle spatial sensiblement constant (lorsque la vitesse horizontale du véhicule est sensiblement constante).

Cependant, de tels capteurs (spatiaux ou aéroportés) sont soumis à des vibrations qui induisent des mouvements indésirables de la ligne de visée, entraînant des écarts entre les positions théoriques des portions observées au sein de la scène et leurs positions réelles.

Ces écarts se retrouvent, au niveau des images lignes, sous la forme de décalages entre la position qu'une image ligne va occuper dans l'image composée (par simple juxtaposition de cette image ligne, comme indiqué précédemment) et la position qu'elle devrait occuper dans ladite image composée, pour tenir compte de l'erreur de visée induite par les mouvements indésirables de la ligne de visée du capteur 10.

La figure 2 représente schématiquement en traits pleins les positions de deux images lignes consécutives $L_i$ et $L_{i+1}$ au sein d'une image composée. Celles-ci sont juxtaposées, en alignant les pixels. On a représenté en traits discontinus la position au sein de l'image composée que devrait occuper la ligne $L_{i+1}$, compte tenu du fait qu'elle représente une portion de la scène sensiblement décalée par rapport à la portion théoriquement visée.

On comprend dès lors que, du fait du décalage de l'image ligne $L_{i+1}$, des déformations géométriques vont être induites dans l'image composée.

Les mouvements de la ligne de visée causés par des vibrations basses fréquences (comprises dans une plage allant de zéro Hertz à quelques dizaines de Hertz), sont généralement estimés au cours de l'acquisition au moyen de senseurs dédiés, tels que des gyroscopes, de sorte qu'il est possible de déterminer et de corriger les décalages des images lignes causés par les vibrations basses fréquences.

Par contre, les mouvements de la ligne de visée causés par des vibrations hautes fréquences (comprises entre quelques dizaines de Hertz et quelques milliers de Hertz), ne sont pas déterminés au cours de l'acquisition au moyen de senseurs dédiés, en particulier parce qu'ils ne correspondent pas à des mouvements d'ensemble du véhicule mais plutôt à des vibrations locales du capteur et/ou de son support.

Il est connu de la demande de brevet FR 2 899 344 et de la demande de brevet US 2008/031528 de restituer la ligne de visée d'un instrument en fonction de deux images représentant la même portion d'une scène observée. Des zones caractéristiques homologues, correspondant au même point de la scène observée, sont mises en correspondance dans chacune de ces images. La ligne de visée est ensuite restituée par comparaison des positions des ces zones caractéristiques dans chacune desdites images représentant la même scène. Cette solution repose, pour la détermination de zones caractéristiques homologues correspondant au même point de la scène observée, sur le fait de disposer d'au moins deux images représentant la même portion de la scène. Cette solution n'est pas applicable pour restituer la ligne de visée en fonction d'images lignes d'une image composée, lesdites images lignes représentant des portions différentes de la scène observée.

Il n'est pas connu de solution permettant de corriger les décalages d'images lignes d'une image composée, acquises par un capteur à défilement, spatial ou aéroporté, dans le cas où on ne dispose pas d'au moins deux images représentant une même portion de la scène observée.

La présente invention se propose de résoudre les problèmes susmentionnés au moyen d'un procédé d'estimation de décalages d'images lignes d'une image composée, constituée par la juxtaposition de J images lignes, dans lequel les images lignes représentent des portions différentes d'une scène à la surface d'un corps céleste, acquises successivement par une ligne de cellules sensibles d'un capteur embarqué dans un véhicule survolant ledit corps céleste, chaque image ligne étant constituée d'une pluralité de pixels, et une image ligne $L_j$, $1 \leq j \leq J$, présente un décalage latéral et/ou longitudinal entre la position que l'image ligne $L_j$ est destinée à occuper dans l'image composée et la position qu'elle devrait occuper du fait d'une erreur de visée du capteur au cours de l'acquisition de l'image ligne $L_j$.

Selon l'invention, le décalage latéral et/ou longitudinal d'une image ligne $L_j$, relativement à une image ligne $L_i$, j différent de i, est estimé en fonction d'un modèle local de variation latérale et/ou longitudinale de la ressemblance entre images lignes différentes.

De préférence, le modèle local de variation latérale et/ou longitudinale de la ressemblance entre images lignes différentes est déterminé par calcul de valeurs de ressemblance entre des images lignes différentes de l'image composée.

De préférence, le procédé d'estimation de décalages d'images lignes comporte une étape d'estimation du décalage latéral relatif $\delta_j$ de l'image ligne $L_j$ relativement à l'image ligne $L_i$, au cours de laquelle le modèle local de variation latérale de ressemblance entre images lignes successives est déterminé en calculant des valeurs de ressemblance de l'image ligne $L_j$ avec l'image ligne $L_i$ pour une pluralité de valeurs de translation latérale d'une ligne par rapport à l'autre, le décalage latéral relatif $\delta_j$ étant estimé comme étant la translation latérale pour laquelle la valeur du modèle de variation latérale de ressemblance est maximale.

De préférence, le décalage latéral relatif $\delta_j$ de l'image ligne $L_j$, relativement à une image ligne $L_i$, est estimé sous la forme d'un nombre entier relatif ou d'un nombre réel de pixels.

De préférence, le procédé d'estimation de décalages d'images lignes comporte une étape d'intégration des décalages latéraux relatifs $\delta_j$ d'images lignes successives, pour déterminer des décalages latéraux cumulés $\delta'_j$ par rapport à une image ligne de référence.

De préférence, le procédé d'estimation de décalages d'images lignes comporte une étape de filtrage coupe-bas des décalages latéraux relatifs $\delta_j$ ou cumulés $\delta'_j$.

De préférence, le procédé d'estimation de décalages d'images lignes comporte une étape d'estimation du décalage longitudinal relatif $\Delta_j$ de l'image ligne $L_j$ relativement à l'image ligne $L_i$, au cours de laquelle on calcule une valeur de ressemblance de l'image ligne $L_j$ et de l'image ligne $L_i$, et on estime le décalage longitudinal relatif $\Delta_j$ en fonction de l'écart longitudinal correspondant, d'après le modèle local de variation longitudinale de ressemblance, à ladite valeur de ressemblance de l'image ligne $L_j$ et de l'image ligne $L_i$.

De préférence, lorsque des décalages latéraux ont été préalablement estimés, l'étape d'estimation du décalage longitudinal relatif $\Delta_j$ est appliquée à des images lignes $L'_j$ au lieu des images lignes $L_j$, $1 \leq j \leq J$, lesdites images lignes $L'_j$ correspondant aux images lignes $L_j$ après correction desdits décalages latéraux estimés.

De préférence, le modèle local de variation longitudinale de ressemblance entre images lignes successives est calculé, pour un écart longitudinal théorique donné entre deux images lignes, en moyennant des valeurs de ressemblance calculées pour une pluralité de paires d'images lignes espacées dudit écart longitudinal théorique donné.

De préférence, le modèle local de variation longitudinale de ressemblance entre images lignes successives est calculé entre les écarts longitudinaux théoriques par interpolation en fonction des valeurs calculées pour les écarts longitudinaux théoriques.

De préférence, le procédé d'estimation de décalages d'images lignes comporte une étape d'intégration des décalages longitudinaux relatifs $\Delta_j$ d'images lignes successives pour déterminer des décalages longitudinaux cumulés $\Delta'_j$ par rapport à une image ligne de référence.

De préférence, le procédé d'estimation de décalages d'images lignes comporte une étape de filtrage coupe-bas des décalages longitudinaux relatifs ou cumulés.

De préférence, l'image ligne $L_j$ et l'image ligne $L_i$ sont des images lignes consécutives, et/ou les étapes du procédé d'estimation sont itérées au moins une fois.

L'invention concerne également un procédé de formation d'images composées à partir d'images lignes présentant des décalages, comportant au moins :

- une étape d'estimation des décalages des images lignes mettant en oeuvre le procédé d'estimation de décalages selon l'invention,
- une étape de correction des décalages estimés des images lignes,
- une étape de juxtaposition des images lignes corrigées.

L'invention concerne également un procédé de formation d'images composées à partir d'images lignes présentant des décalages, comportant au moins :

- une étape d'estimation des décalages d'un premier jeu d'images lignes acquises par un premier capteur, mettant en oeuvre le procédé d'estimation de décalages selon l'invention,
- une étape de conversion des décalages estimés en un second jeu de décalages pour un second jeu d'images lignes, acquises par un second capteur embarqué dans le véhicule et soumis sensiblement aux mêmes erreurs de visée que le premier capteur,
- une étape de correction du second jeu de décalages du second jeu d'images lignes, et une étape de juxtaposition du second jeu d'images lignes corrigées.

La description suivante de modes de mise en oeuvre de l'invention est faite en se référant aux figures, qui représentent de manière non limitative :

- Figure 1 : déjà décrite, une représentation schématique d'un capteur à défilement survolant une scène à observer,
- Figure 2 : déjà décrite, une représentation schématique illustrant les décalages d'une image ligne,
- Figure 3 : un diagramme illustrant les différentes étapes d'un procédé d'estimation de décalage d'images lignes selon un mode préféré de mise en oeuvre de l'invention,
- Figure 4 : une représentation d'un exemple de modèle local de variation latérale de ressemblance d'images lignes,
- Figure 5: une représentation d'un exemple de modèle local de variation longitudinale de ressemblance d'images lignes,
- Figure 6 : un diagramme illustrant les différentes étapes d'un procédé de formation d'images composées selon l'invention.

Tel que décrit précédemment en référence aux figures 1 et 2, des images lignes sont acquises par une ligne de cellules sensibles d'un capteur 10 optique à défilement, embarqué dans un véhicule survolant un corps céleste, et sont destinées à être juxtaposées afin de former une image composée représentant une scène à la surface du corps céleste. De manière non limitative, on considère dans la suite de l'exposé le cas où le corps céleste est la Terre.
Le défilement du plan de visée permet d'acquérir successivement des images lignes correspondant à des portions différentes de la scène observée, c'est-à-dire des portions disjointes ou qui se recouvrent au plus partiellement. Des images lignes différentes d'une image composée représentent par conséquent des portions différentes de la scène observée.
Le défilement du plan de visée du capteur 10 s'effectue par exemple par déplacement du véhicule (avion, drone, hélicoptère, satellite, etc.) par rapport à la Terre. Suivant un autre exemple, le défilement du plan de visée du capteur 10 s'effectue par déplacement dudit plan de visée par rapport au véhicule, c'est à dire en modifiant la valeur de l'angle entre la ligne de visée et l'axe Z, par exemple au moyen d'un mécanisme de balayage portant soit le capteur 10, soit un miroir en vis-à-vis du capteur 10. Cela peut être le cas pour un satellite d'observation en orbite géostationnaire, stabilisé selon trois axes.
On suppose que les pixels d'une même image ligne sont acquis simultanément, ou du moins dans un intervalle de temps suffisamment court pour que les décalages des pixels d'une même image ligne soient négligeables par rapport au décalage global de ladite image ligne. C'est par exemple le cas si la fréquence d'acquisition des pixels est significativement supérieure à la fréquence maximale des vibrations du capteur 10 (la fréquence maximale étant la fréquence au-delà de laquelle l'amplitude des mouvements est négligeable par rapport aux dimensions du capteur 10, de l'ordre de quelques centaines de Hertz à quelques milliers de Hertz en pratique).
On considère que les mouvements de la ligne de visée se traduisent principalement sur les images lignes par des décalages latéraux (suivant l'axe X de la ligne de cellules sensibles du capteur 10) induits par des rotations indésirables de la ligne de visée autour de l'axe Y, dites « rotations en roulis », et par des décalages longitudinaux (suivant l'axe Y de défilement du capteur 10) induits par des rotations indésirables de la ligne de visée autour de l'axe X, dites « rotations en tangage ». Les autres perturbations sur les images lignes, par exemple induites par des rotations du capteur 10 autour de l'axe Z, ne sont pas considérées dans la suite de l'exposé.
Par ailleurs, on s'intéresse principalement aux décalages introduits par des vibrations hautes fréquences, c'est-à-dire dans le contexte de l'invention supérieures à quelques dizaines de Hertz (Hz). Tel que décrit précédemment, les mouvements basses fréquences (comprises entre zéro et quelques dizaines de Hz) sont estimés par d'autres moyens connus de l'homme de l'art, par exemple à partir de mesures, absolues ou relatives par rapport à une surface S survolée, du déplacement et de l'orientation du véhicule, couplées éventuellement avec des mesures d'angle de balayage de la ligne de visée instrument, etc.

La présente invention concerne un procédé d'estimation de décalages d'images lignes et un procédé de formation d'images composées à partir d'images lignes présentant des décalages, dont la mise en oeuvre est par exemple assurée par un dispositif de calcul (microcontrôleur, ordinateur muni d'un microprocesseur, etc.). Le dispositif de calcul comporte des moyens de mémorisation (disque dur magnétique, mémoire flash, disque optique, etc.) dans lesquels sont mémorisés des codes d'instructions à exécuter pour mettre en oeuvre les étapes d'un ou des procédés selon l'invention, ainsi que les images lignes acquises par le capteur 10. Suivant certains modes de réalisation, le dispositif de calcul comporte également des circuits intégrés spécialisés, de type ASIC, FPGA, etc., adaptés à mettre en oeuvre tout ou partie des étapes d'un ou des procédés selon l'invention.

Le dispositif de calcul est de préférence embarqué avec le capteur 10 dans le véhicule survolant la Terre dans le cas d'un traitement en temps réel. Dans le cas d'un traitement en temps différé, le dispositif de calcul est indifféremment embarqué avec le capteur 10 dans le véhicule, ou déporté, c'est-à-dire localisé dans une station terrestre ou dans un second véhicule survolant la Terre.

Définitions et notations

Les définitions et notations utilisées dans la suite de l'exposé sont données ci-après. On comprend que le choix d'une convention particulière, pour les besoins de la description de modes de réalisation de l'invention, n'est pas limitatif de l'invention qui pourrait être décrite de manière équivalente en adoptant d'autres conventions sans que l'invention en soit modifiée.

On considère une image composée comportant un nombre entier J d'images lignes $L_i$ ($1 \leq i \leq J$), acquises à des instants différents, représentant des portions différentes de la scène observée à la surface S de la Terre. En pratique, J est généralement supérieur à quelques centaines, voire supérieur à quelques milliers.

Chaque image ligne $L_i$ comporte un nombre entier N de pixels représentant N zones adjacentes de la portion observée. On désigne par $L_i(n)$ le pixel d'indice n ($1 \leq n \leq N$) de l'image ligne $L_i$. En pratique, N est généralement égal ou supérieur à quelques dizaines de pixels, certaines applications pouvant aller jusqu'à quelques dizaines de milliers de pixels.

Une image ligne $L_i$ peut être considérée mathématiquement soit comme une fonction $L_i(x)$ d'une variable x, définie pour les valeurs entières de x de l'intervalle [1 ; N], soit comme un vecteur de nombres réels $[L_i(1),..., L_i(n)]$.

Pour un indice n donné, l'ensemble des pixels $L_i(n)$ ($1 \leq i \leq J$) constitue une colonne d'indice n de l'image composée. La colonne de pixels d'indice n peut être considérée mathématiquement soit comme une fonction $L_y(n)$ d'une variable y, définie pour les valeurs entières de y de l'intervalle [1 ; J], soit comme un vecteur de nombres réels $[L_1(n),..., L_J(n)]$.

L'image ligne $L_i$ présente un décalage latéral et/ou longitudinal entre la position que l'image ligne $L_i$ va occuper dans l'image composée et la position qu'elle devrait occuper dans ladite image composée, du fait de l'erreur de visée induite par les mouvements indésirables de la ligne de visée du capteur 10. Le décalage latéral et/ou longitudinal de l'image ligne $L_i$ est exprimé de manière non limitative en nombre (entier ou réel) de pixels.

Par « décalage (latéral et/ou longitudinal) relatif » d'une image ligne $L_j$ relativement à une image ligne $L_i$, on entend la différence entre le décalage latéral et/ou longitudinal de l'image ligne $L_j$ et le décalage latéral et/ou longitudinal de l'image ligne $L_i$.

Selon l'invention, le décalage relatif d'une image ligne $L_j$ ($1 \leq j \leq J$) par rapport à une image ligne $L_i$, i étant différent de j, est estimé au moyen d'au moins un modèle local de variation de la ressemblance entre images lignes successives, déterminé par calcul de valeurs de ressemblance entre des images lignes différentes de l'image composée.

En effet, bien que les images lignes représentent des portions différentes de la scène observée à la surface S de la Terre, il existe en pratique, sur tout ou partie de la fauchée du capteur 10, une ressemblance radiométrique entre des portions successives, du fait de la cohérence spatiale de la scène observée. Ceci est d'autant plus vrai en pratique que la fauchée du capteur 10 est importante par rapport à l'intervalle spatial entre deux portions consécutives de la scène, de préférence un facteur 100 ou plus, ce qui est assuré en pratique au moyen d'un capteur comportant une ligne d'au moins quelques dizaines de cellules sensibles d'une part, et en configurant le défilement du capteur 10 pour balayer des portions adjacentes d'autre part.

Une fonction de ressemblance, désignée par R, associe une valeur de ressemblance $R(L_i,L_j)$ à des images lignes $L_i$ et $L_j$ de l'image composée

La fonction de ressemblance R peut être toute fonction des images lignes comparées, considérées mathématiquement comme des vecteurs, dont le maximum est atteint lorsque lesdites images lignes sont identiques, et qui décroît à mesure qu'une distance (au sens mathématique du terme) entre lesdites images lignes augmente, la distance entre les images lignes étant par exemple la distance euclidienne, ou toute autre distance connue de l'homme de l'art

La fonction de ressemblance R est par exemple une fonction d'intercorrélation, qui associe aux images lignes comparées une valeur de ressemblance proportionnelle à leur produit scalaire.

Suivant un autre exemple, la fonction de ressemblance R s'exprime sous la forme :

$$R(L_i, L_j) = \exp(-\|L_i - L_j\|^2)$$

où $\|x\|$ désigne la norme 2 du vecteur x.

Suivant un autre exemple, la fonction de ressemblance R s'exprime sous la forme :

$$R(L_i, L_j) = 1 - \|L_i - L_j\| / (\|L_i\| + \|L_j\|)$$

De manière plus générale, la fonction de ressemblance R entre deux images lignes peut être calculée non pas à partir de l'ensemble complet des pixels des deux images lignes mais à partir d'un sous-ensemble plus restreint de pixels, avantageusement de même rang, desdites deux images lignes.

Par modèle local de variation latérale de la ressemblance entre images lignes différentes, on entend un modèle indiquant comment varie la ressemblance entre des images lignes différentes de l'image composée en fonction de l'écart latéral entre ces images lignes différentes.

Le modèle de variation latérale de la ressemblance, local à l'image ligne $L_i$, est désigné par $R^{lat}_i$. Pour estimer le décalage latéral relatif entre les images lignes $L_i$ et $L_j$, le modèle local de variation latérale $R^{lat}_i$ est par exemple la fonction qui associe, à un écart latéral de k pixels, la valeur de ressemblance $R(L_i, L_j[k])$, désignée par $R_{i,j}[k]$, où l'image ligne $L_j[k]$ correspond à l'image ligne $L_j$ translatée latéralement d'un nombre k de pixels par rapport à $L_i$, de sorte que $L_j[k](n) = L_j(n-k)$.

Dans le cas général, pour calculer la valeur de ressemblance entre les images lignes $L_i$ et $L_j[k]$, il faut mettre en correspondance les deux images lignes au sens où les pixels de rang n des deux images lignes : $L_i(n)$ et $L_j[k](n)$ ($1 \leq n \leq N$) sont alignés suivant l'axe Y.

Les images lignes $L_i$ et $L_j[k]$ sont en correspondance, lorsque k a une valeur entière, sauf sur les bords desdites images lignes lorsque k est différent de zéro ($L_j(n-k)$ n'est pas défini si (n-k) n'est pas dans l'intervalle [1 ; N]). Dans ce cas, pour mettre en correspondance les deux images lignes $L_i$ et $L_j[k]$, il faut par exemple extrapoler l'image ligne $L_j$ (et/ou l'image ligne $L_i$), en mettant en oeuvre des procédés connus de l'homme de l'art, pour déterminer les valeurs des pixels $L_j(n-k)$ non définies a priori, c'est-à-dire pour les valeurs de (n-k) non comprises dans l'intervalle [1 ; N]. Suivant une variante préférée, la mise en correspondance entre les deux images lignes est limitée aux sous-ensembles de pixels communs et le calcul de ressemblance s'effectuera sur ce sous-ensemble.

On peut généraliser la translation latérale de l'image ligne $L_j$ (considérée ici comme une fonction), et sa mise en correspondance avec d'autres images lignes, à un nombre k non entier de pixels.

Dans ce cas, les valeurs des pixels $L_j(n-k)$ ne sont pas définies, même pour les valeurs de (n-k) comprises dans l'intervalle [1 ; N], du fait que seules les valeurs des pixels $L_j(n)$, n entier compris dans l'intervalle [1 ; N], sont définies. L'image ligne $L_j$ doit dans ce cas être ré-échantillonnée pour déterminer les valeurs de pixels $L_j(n-k)$ pour des valeurs non entières de la translation latérale k. Le ré-échantillonnage de l'image ligne $L_j$ (ou de manière équivalente de l'image ligne $L_j[K]$, K étant par exemple la partie entière de k) s'effectue en mettant en oeuvre des procédés connus de l'homme de l'art, par exemple une interpolation de la fonction $L_j(x)$ à des valeurs non entières de la variable x par une méthode polynomiale (cubique par exemple), Shannon tronquée, spline, etc.

Le calcul des valeurs de ressemblance entre les images lignes $L_i$ et $L_j[k]$, et donc du modèle local de variation latérale $R^{lat}_i$ de ressemblance, pourra ainsi se généraliser pour des valeurs de k non entières, en effectuant un ré-échantillonnage et une mise en correspondance de l'image ligne $L_j[k]$ avec l'image ligne $L_i$.

Par modèle local de variation longitudinale de la ressemblance entre images lignes différentes, on entend un modèle indiquant comment varie la ressemblance entre des images lignes différentes en fonction de l'écart longitudinal entre ces images lignes différentes.

Le modèle de variation longitudinale de la ressemblance, local à l'image ligne $L_i$, est désigné par $R^{long}_i$. Le modèle local de variation longitudinale $R^{long}_i$ est par exemple la fonction qui associe, à un écart longitudinal de m pixels, la valeur de ressemblance $R(L_i, L_{i+m})$ de l'image ligne $L_i$ et de l'image ligne $L_{i+m}$. Le modèle peut se calculer pour des valeurs entières de m et être généralisé à des valeurs non entières, par exemple par interpolation.

Procédé d'estimation de décalages d'images lignes

Le procédé d'estimation comporte principalement une étape d'estimation du décalage latéral et/ou longitudinal

relatif d'une image ligne $L_j$ de l'image composée relativement à une image ligne $L_i$ de l'image composée au moyen d'un modèle local de variation latérale et/ou longitudinale de la ressemblance.

De préférence, le procédé d'estimation comporte également une étape d'intégration des décalages latéraux et/ou longitudinaux relatifs d'images lignes successives, pour déterminer des décalages, dits « décalages cumulés », relativement à une même image ligne, dite « image ligne de référence ».

De préférence, le procédé d'estimation comporte également une étape de filtrage coupe-bas des décalages latéraux et/ou longitudinaux, exécutée préalablement, simultanément, ou postérieurement à l'étape d'intégration précédente, pour supprimer en tout ou partie la dérive à basse fréquence de l'estimation des décalages relatifs ou cumulés.

Les différentes étapes du procédé d'estimation sont décrites ci-après dans le cadre de la description d'un mode préféré de mise en oeuvre du procédé d'estimation, donné à titre d'exemple nullement limitatif de l'invention, dans lequel le procédé est mis en oeuvre pour estimer à la fois des décalages latéraux et des décalages longitudinaux.

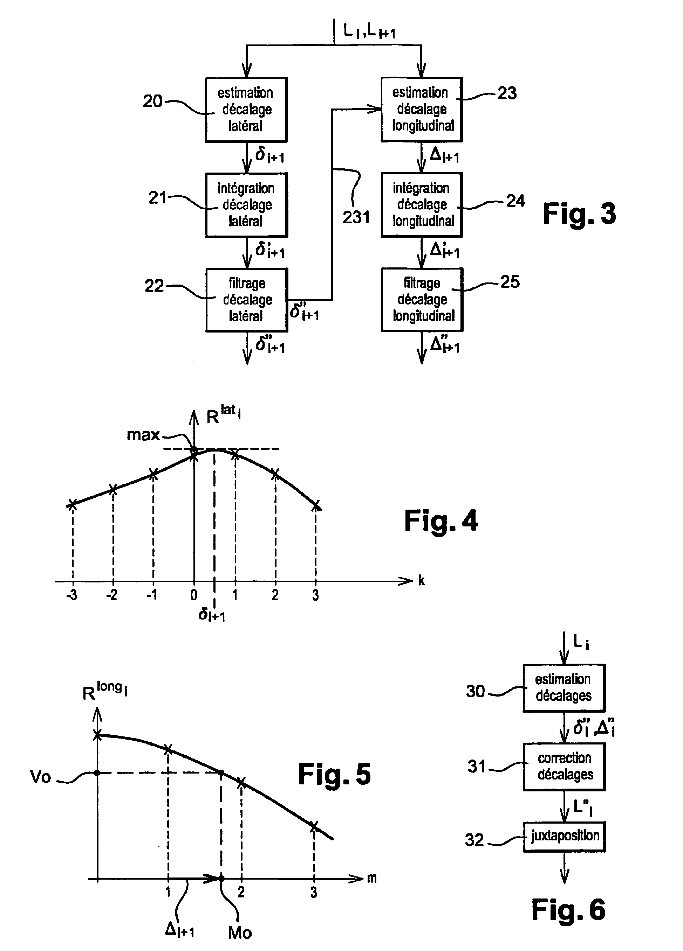

Le mode préféré de mise en oeuvre du procédé, décrit ci-après, comporte principalement les étapes suivantes, représentées schématiquement sur la figure 3 :

- étape 20 d'estimation des décalages latéraux,
- étape 21 d'intégration des décalages latéraux,
- étape 22 de filtrage des décalages latéraux,
- étape 23 d'estimation des décalages longitudinaux,
- étape 24 d'intégration des décalages longitudinaux,
- étape 25 de filtrage des décalages longitudinaux.

a) Etape 20 d'estimation de décalages latéraux

L'étape 20 d'estimation de décalages latéraux est décrite dans le cadre de l'estimation du décalage latéral relatif d'une image ligne $L_j$ de l'image composée relativement à une image ligne $L_i$ de l'image composée ($1 \leq j \neq i \leq J$).

De préférence, les images lignes considérées sont des images lignes consécutives, par exemple j = i+1. Cet exemple n'est pas limitatif de l'invention qui peut être mise en oeuvre en considérant des images lignes non immédiatement consécutives de l'image composée, sous réserve de l'existence d'une ressemblance entre lesdites deux images lignes, qui doit être vérifiée au cas par cas suivant le type de scène observée.

Le décalage latéral relatif $\delta_{i+1}$ de l'image ligne $L_{i+1}$, relativement à l'image ligne $L_i$, est estimé au moyen d'un modèle $R^{lat}_i$, local aux images lignes $L_i$ et $L_{i+1}$, de variation latérale de la ressemblance entre images lignes différentes de l'image composée.

Le modèle $R^{lat}_i$ est déterminé en calculant les valeurs de ressemblance $R^{lat}_i(k) = R_{i,i+1}[k]$ pour une pluralité de valeurs de translation latérale k.

On fait ensuite l'hypothèse que la ressemblance entre les images lignes $L_i$ et $L_{i+1}$ est maximale lorsqu'aucune perturbation ne vient affecter la prise de l'image $L_{i+1}$ par rapport à la prise de l'image $L_i$, et qu'elle diminue à mesure que la valeur absolue de k augmente. Cette hypothèse est d'autant mieux vérifiée que la ressemblance radiométrique entre les images lignes (non perturbées) est importante du fait de la cohérence spatiale de la scène observée et du fait que la fauchée du capteur 10 est importante.

A partir de cette hypothèse, le décalage latéral relatif $\delta_{i+1}$ de l'image ligne $L_{i+1}$, relativement à l'image ligne $L_i$, est ensuite estimé comme étant la translation latérale k pour laquelle la valeur du modèle local de variation latérale $R^{lat}_i$ est maximale :

$$\delta_{i+1} = \arg(\max_k(R^{lat}_i(k))).$$

La figure 4 représente un exemple de modèle local de variation latérale $R^{lat}_i$, et le décalage latéral $\delta_{i+1}$, obtenu pour la valeur maximale dudit modèle, désignée par « max ».

La recherche de la translation latérale k pour laquelle la valeur du modèle local de variation latérale $R^{lat}_i$ est maximale s'effectue, suivant l'implémentation choisie, soit en se limitant à des valeurs entières relatives de la translation latérale k, soit pour des valeurs réelles.

Dans le cas où on se limite à des valeurs entières de k, on calcule des valeurs de ressemblance $R_{i,i+1}[k]$ des images lignes $L_{i+1}$ et $L_i$ pour une pluralité de valeurs entières de la translation latérale k, de préférence toutes les valeurs entières comprises dans un intervalle $[-K_1 ; K_2]$, où $K_1$ et $K_2$ sont des nombres entiers ou réels positifs de pixels, de préférence de l'ordre de la dizaine. Les valeurs de ressemblance $R_{i,i+1}[k]$ ainsi calculées forment le modèle local de variation latérale $R^{lat}_i$ de la ressemblance. On détermine ensuite, sur cet ensemble de valeurs, la valeur entière de k pour laquelle la valeur du modèle local de variation latérale $R^{lat}_i$ est maximale.

Le cas échéant, les valeurs du modèle local de variation latérale $R^{lat}_i$, pour des valeurs réelles de la translation latérale k, sont égales aux valeurs de ressemblance $R_{i,i+1}[k]$ déterminées soit par ré-échantillonnage de l'image ligne $L_{i+1}$ préalablement au calcul de la valeur de ressemblance $R_{i,i+1}[k]$, soit par interpolation du modèle local de variation latérale $R^{lat}_i$ à partir des valeurs $R_{i,i+1}[k]$ calculées pour des valeurs entières de k.

L'interpolation peut s'effectuer suivant tout procédé permettant d'estimer les valeurs d'une fonction à partir d'un ensemble discret de valeurs connues, comme par exemple l'interpolation linéaire, polynomiale, ou l'approximation aux moindres carrés, auquel cas la fonction interpolée ne passe pas nécessairement en tous les points $(k,R_{i,i+1}[k])$ calculés.

Suivant une variante, on calcule des valeurs $R^{lat}_i(k)$ du modèle local de variation latérale pour un ensemble fini de valeurs de k réelles sur l'intervalle $[-K_1 ; K_2]$. Par exemple, on considère toutes les valeurs de k multiples de 0.2 pixels dans cet intervalle. Ensuite on détermine, sur cet ensemble de valeurs, la valeur de k pour laquelle la valeur dudit modèle est maximale.

Suivant une autre variante, la recherche de maximum s'effectue par dichotomie. Par exemple, en référence à la figure 4, on calcule les valeurs $R^{lat}_i(k)$ du modèle local de variation latérale $R^{lat}_i$ pour les valeurs entières de k allant de -3 à +3. Il apparaît alors que le maximum du modèle qui serait interpolée pour des valeurs non entières de k se situerait entre 0 et +1. On calcule alors la valeur $R^{lat}_i(1/2)$ du modèle comme étant la valeur de ressemblance $R_{i,i+1}[1/2]$, calculée en fonction de $L_{i+1}[1/2]$ (obtenue par ré-échantillonnage de $L_{i+1}$) et de $L_i$. On compare ensuite les valeurs $R^{lat}_i(k)$ pour k égal à 0, 1/2 et 1 pour savoir dans quel intervalle, [0, 1/2] ou [1/2, 1], se situe le maximum du modèle local de variation latérale $R^{lat}_i$, puis on poursuit la recherche par dichotomie en réduisant itérativement l'intervalle de recherche d'un facteur 2 à chaque fois.

On comprend que tout procédé de recherche de maximum peut être mis en oeuvre au cours de l'étape 20 du procédé d'estimation, et que le choix d'un procédé de recherche de maximum particulier n'est qu'une variante d'implémentation du procédé d'estimation selon l'invention.

Au cours de l'étape 20 d'estimation de décalages latéraux relatifs, on estime des décalages latéraux relatifs pour une pluralité d'images lignes. On considère, de manière non limitative, qu'on estime le décalage latéral relatif de chaque image ligne d'indice 2 à J par rapport à l'image ligne précédente dans l'image composée.

b) Etape 21 d'intégration des décalages latéraux

L'étape 21 d'intégration des décalages latéraux relatifs $\delta_{i+1}$, $1 \le i \le J-1$, estimés au cours de l'étape 20 précédente vise à déterminer des décalages latéraux cumulés relativement à une image ligne de référence de l'image composée, dans l'exemple considéré ici l'image ligne $L_1$. Ceci s'avère avantageux pour les ré-échantillonnages nécessaires pour la mise en correspondance de toutes les images lignes, en vue de la formation de l'image composée.

Au cours de l'étape d'intégration des décalages latéraux relatifs $\delta_{i+1}$, $1 \le i \le J-1$, lesdits décalages latéraux relatifs sont par exemple additionnés, et les décalages latéraux cumulés obtenus, désignés par $\delta'_i$, $1 \le i \le J$, peuvent être exprimés par récurrence comme suit :

$$\delta'_1 = 0,$$

$$\delta'_{i+1} = \delta'_i + \delta_{i+1}, \text{ pour } 1 \le i \le J-1.$$

c) Etape 22 de filtrage des décalages latéraux

Les décalages latéraux cumulés $\delta'_i$, $1 \le i \le J$, sont filtrés au moyen d'un filtre coupe-bas.

Le but de cette étape 22 de filtrage est de supprimer en tout ou partie les variations basses fréquences des décalages latéraux cumulés, variations basses fréquences qui, d'une part, sont supposées être estimées par d'autres moyens lorsqu'elles sont induites par des erreurs de visée, et qui, d'autre part, peuvent provenir de variations de la scène observée et non pas d'erreurs de visée.

Dans un mode préféré de mise en oeuvre, le filtre est un filtre passe-bande, c'est-à-dire à la fois coupe-bas et coupe-haut. Dans ce cas les variations hautes fréquences sont également supprimées en tout ou partie, du fait qu'elles correspondent en pratique principalement à du bruit de mesure plutôt qu'à des erreurs de visée du capteur 10.

Dans le cas considéré ici où la fauchée du capteur 10 est importante par rapport à l'intervalle spatial entre deux portions successives de la scène observée, les paramètres du filtre appliqué peuvent être exprimés en pixels.

De préférence, la fréquence de coupure basse, désignée par $f_{min}$, est telle que $1/f_{min}$ est comprise entre quelques dizaines de pixels et quelques centaines de pixels. Dans le cas d'un filtre passe-bande, la fréquence de coupure haute, désignée par $f_{max}$, est de préférence telle que $1/f_{max}$ est de l'ordre de quelques pixels.

Les décalages latéraux cumulés après filtrage des images lignes $L_i$ sont désignés par $\delta''_i$, $1 \leq i \leq J$.

La réalisation du filtrage peut se faire dans le domaine temporel ou dans le domaine fréquentiel. Lorsque les calculs sont faits en temps différé, on peut par exemple utiliser une transformée de Fourier de l'ensemble des décalages latéraux cumulés $\delta'_i$ pour passer dans le domaine fréquentiel.

Tel qu'indiqué précédemment, l'étape 22 de filtrage est indifféremment exécutée préalablement, simultanément, ou postérieurement à l'étape 21 d'intégration des décalages latéraux.

### d) Etape 23 d'estimation des décalages longitudinaux

L'étape 23 d'estimation de décalages longitudinaux est décrite dans le cadre de l'estimation du décalage longitudinal relatif d'une image ligne $L_j$ de l'image composée relativement à une image ligne $L_i$ de l'image composée ($1 \leq j \neq i \leq J$).

Comme précédemment dans l'étape 20 d'estimation des décalages latéraux relatifs, les images lignes considérées sont de préférence mais non nécessairement des images lignes consécutives de l'image composée, et on considère de manière non limitative que j = i+1.

Dans un mode préféré de mise en oeuvre, considéré dans la suite de l'exposé, l'étape 23 d'estimation des décalages longitudinaux relatifs est appliquée en tenant compte 231 des décalages latéraux relatifs, lorsqu'ils ont été préalablement estimés, pour corriger préalablement les images lignes $L_i$ desdits décalages latéraux relatifs estimés. L'étape 23 s'effectue dans ce mode préféré sur des images lignes $L'_i$ correspondant aux images lignes $L_i$ corrigées desdits décalages latéraux relatifs estimés. La correction est réalisée en translatant latéralement les images lignes $L_i$ des décalages latéraux estimés, translation qui s'accompagne le cas échéant d'une interpolation et/ou d'un ré-échantillonnage. On considère donc, pour l'exécution de l'étape 23 d'estimation des décalages longitudinaux relatifs, des images lignes $L'_i$ correspondant aux images lignes $L_i[\delta'_i]$ ou, de préférence, aux images lignes $L_i[\delta''_i]$, $1 \leq i \leq J$, avantageusement mises en correspondance par ré-échantillonnage.

On notera que les équations suivantes, relatives à l'étape 23 d'estimation des décalages longitudinaux relatifs, s'appliquent à l'identique au cas où l'étape est appliquée sans correction préalable des décalages latéraux, en considérant directement les images lignes $L_i$, $1 \leq i \leq J$.

Le décalage longitudinal relatif $\Delta_{i+1}$ de l'image ligne $L'_{i+1}$, relativement à l'image ligne $L'_i$, est estimé en déterminant un modèle $R^{long}_i$, local aux images lignes $L'_i$ et $L'_{i+1}$, de variation longitudinale de la ressemblance d'images lignes différentes de l'image composée.

Dans un mode préféré de mise en oeuvre, le modèle local de variation longitudinale de ressemblance, relativement à l'image ligne $L_i$, est déterminé comme décrit ci-après.

Le modèle local de variation longitudinale $R^{long}_i$ est de préférence déterminé pour des valeurs d'écart longitudinal m d'images lignes successives comprises dans un intervalle [0 ; M], où M est un nombre entier ou réel positif de pixels supérieur à un, de préférence égal ou supérieur à deux.

Les valeurs entières de l'écart longitudinal m, exprimé en pixels, correspondent à l'écart longitudinal théorique entre deux images lignes successives $L'_i$ et $L'_{i+m}$ séparées par m périodes d'acquisition. Cet écart longitudinal est théorique du fait que lesdites images lignes présentent en pratique des décalages longitudinaux dus notamment aux mouvements indésirables en tangage de la ligne de visée du capteur 10 au cours de l'acquisition.

Les valeurs $R^{long}_i(m)$ du modèle pour des valeurs entières de m sont déterminées de préférence en moyennant des valeurs de ressemblance $R_{q,q+m}[0]$, c'est-à-dire la valeur de ressemblance des images lignes $L'_q$ et $L'_{q+m}$ mises en correspondance sans translation latérale. Les valeurs de ressemblance $R_{q,q+m}[0]$ sont calculées pour chaque entier q compris dans un intervalle local [$i-Q_1$ ; $i+Q_2$], où $Q_1$ et $Q_2$ sont deux entiers positifs ou nuls, dont l'un au moins est strictement positif. Par exemple, les valeurs $R^{long}_i(m)$ du modèle s'expriment sous la forme :

$$R^{long}_i(m) = (1/(Q_1+Q_2+1)) \cdot (\Sigma_{q \in [i-Q1 \,;\, i+Q2]} R_{q,q+m}[0])$$

où le nombre de valeurs de ressemblance moyennées ($Q_1+Q_2+1$) est de préférence de l'ordre de la dizaine, voire de la centaine.

Suivant un mode particulier de mise en oeuvre, la moyenne des valeurs de ressemblance $R_{q,q+m}[0]$ est pondérée, avec des coefficients de pondération $\alpha_q$. De préférence, les coefficients de pondération $\alpha_q$ décroissent à mesure que q s'éloigne de i. Les valeurs $R^{long}_i(m)$ du modèle s'expriment dans ce cas sous la forme :

$$R^{long}_i(m) = (1/(\Sigma_{q\in[i-Q1\,;\,i+Q2]}\alpha_q)) \cdot (\Sigma_{q\in[i-Q1\,;\,i+Q2]}\alpha_q R_{q,q+m}[0])$$

De préférence, on calcule ainsi les valeurs $R^{long}_i(m)$ du modèle pour toutes les valeurs entières de m dans l'intervalle [0 ; M].

Des valeurs $R^{long}_i(m)$ du modèle pour des valeurs réelles de m sont ensuite déterminées par interpolation. L'interpolation peut être effectuée en mettant en oeuvre tout procédé connu de l'homme de l'art, comme par exemple l'interpolation linéaire, polynomiale, l'approximation aux moindres carrés, etc.

La figure 5 représente un exemple de modèle local de variation longitudinale de ressemblance d'images lignes successives de l'image composée.

Par définition, le modèle local $R^{long}_i$ est maximal pour m égal à zéro, la ressemblance étant maximale lorsque les images lignes sont identiques, ce qui est le cas lorsque m est égal à zéro puisqu'on évalue la ressemblance de l'image ligne $L_i$ avec elle-même. D'autre part, on peut s'attendre à ce que le modèle local de variation de ressemblance décroisse lorsque m croît, puisque plus l'écart longitudinal entre des images lignes est grand, plus les portions qu'elles représentent sont éloignées dans la scène observée.

Pour estimer le décalage longitudinal relatif $\Delta_{i+1}$, on calcule la valeur de ressemblance $R_{i,i+1}[0]$ des images lignes $L'_{i+1}$ et $L'_i$.

On détermine ensuite l'écart longitudinal non nécessairement entier correspondant à la valeur de ressemblance $R_{i,i+1}[0]$ d'après le modèle local de variation longitudinale de la ressemblance d'images lignes successives de l'image composée.

Tel que représenté sur la figure 5, le décalage longitudinal relatif $\Delta_{i+1}$ est estimé comme étant la différence entre l'écart longitudinal (désignée sur la figure 5 par « $M_0$ ») déterminé pour la valeur de ressemblance $R_{i,i+1}[0]$ (désignée sur la figure 5 par « $V_0$ »), d'après le modèle local de variation longitudinale de ressemblance, et l'écart longitudinal théorique des images lignes $L'_{i+1}$ et $L'_i$ (c'est-à-dire 1 dans le cas supposé ici de deux images lignes consécutives).

Pour calculer $M_0$, on peut par exemple déterminer une fonction inverse de la fonction $R^{long}_i$ interpolée, éventuellement par morceaux, et calculer sa valeur $M_0$ en $R_{i,i+1}[0]$.

Suivant une variante, on calcule des valeurs $R^{long}_i(m)$ pour une pluralité de valeurs réelles de m dans [0 ; M], par exemple multiples de 0.2 pixels à partir du modèle interpolé, et on détermine la valeur $M_0$ de m pour laquelle les valeurs $R^{long}_i(m)$ et $R_{i,i+1}[0]$ sont les plus proches. Avantageusement, l'estimation de $M_0$ peut en outre être affinée par dichotomie.

On comprend que tout procédé de recherche de l'écart longitudinal correspondant à la valeur de ressemblance $R_{i,i+1}[0]$ peut être mis en oeuvre, et qu'un choix particulier ne constitue qu'une variante d'implémentation du procédé d'estimation selon l'invention.

De préférence, le modèle local de variation longitudinale de ressemblance est mis à jour pour chaque image ligne $L_{i+1}$ dont on cherche à estimer le décalage longitudinal relatif $\Delta_{i+1}$. Suivant d'autres exemples, avantageux d'un point de vue quantité des opérations à effectuer, le même modèle est utilisé pour une pluralité d'images lignes successives, de sorte que la fréquence de mise à jour dudit modèle est réduite par rapport au cas d'une mise à jour pour chaque image ligne.

Au cours de l'étape 23 d'estimation de décalages longitudinaux, on estime des décalages longitudinaux relatifs pour une pluralité d'images lignes. On considère, de manière non limitative, qu'on estime le décalage longitudinal relatif de chaque image ligne d'indice 2 à J par rapport à la précédente.

Il convient de noter que dans le cas où les mouvements basse fréquence du véhicule et/ou de la ligne de visée subissent une accélération importante, il peut arriver que le pas d'acquisition ne soit plus sensiblement constant au cours de ladite acquisition, de sorte que la dimension physique des pixels dans la direction longitudinale varie.

Dans un mode particulier de mise en oeuvre de l'étape 23, le calcul du modèle local $R^{long}_i$ de variation longitudinale de ressemblance tient compte de ces variations lorsqu'elles sont connues. Par exemple, on considère comme dimension longitudinale de référence des pixels la dimension des pixels d'une image ligne $L'_{q0}$, q0 dans [i-$Q_1$ ; i+$Q_2$]. On exprime les dimensions longitudinales des pixels des autres lignes $L'_q$, q dans [i-$Q_1$ ; i+$Q_2$] comme des multiples non nécessairement entiers de la dimension longitudinale de référence, les coefficients multiplicateurs étant le rapport entre les dimensions longitudinales physiques des pixels des images lignes $L'q$ et la dimension longitudinale de référence. Dans ce cas, les écarts longitudinaux théoriques m'(q) entre les images lignes $L'q$ et $L'_{q+m}$ ne sont pas nécessairement des nombres entiers et peuvent varier sensiblement lorsque q varie. Ensuite, on calcule les fonctions de ressemblance $R_{q,q+m}[0]$ des lignes $L'q$ et $L'_{q+m}$ pour q dans [i-$Q_1$ ; i+$Q_2$] et m appartenant à [0 ; M]. Pour le calcul du modèle local de variation longitudinale de ressemblance, les calculs de valeur moyenne ne sont pas adaptés du fait que m'(q) est dans le cas présent variable. Dans une variante du procédé, on effectue pour chaque valeur entière de m dans [0 ; M] un calcul barycentrique des points (m'(q), $R_{q,q+m}[0]$) obtenus pour toutes les valeurs de q comprises dans [i-$Q_1$ ; i+$Q_2$], puis on interpole les barycentres ainsi obtenus pour obtenir le modèle local $R^{long}_i$ de variation longitudinale de ressemblance.

Dans une autre variante, on détermine le modèle local de variation longitudinale de ressemblance comme étant la courbe passant aux moindres carrés au voisinage de tous les points $(m'(q), R_{q,q+m}[0])$ calculés.

<u>e) Etape 24 d'intégration des décalages longitudinaux</u>

Comme pour les décalages latéraux, les décalages longitudinaux relatifs sont intégrés en vue d'obtenir des décalages longitudinaux cumulés par rapport à une image ligne de référence de l'image composée, dans l'exemple considéré ici l'image ligne $L_1$.

Au cours de l'étape d'intégration des décalages longitudinaux relatifs $\Delta_{i+1}$, $1 \leq i \leq J-1$, lesdits décalages longitudinaux relatifs sont par exemple additionnés. Les décalages longitudinaux cumulés obtenus, désignés par $\Delta'_i$, $1 \leq i \leq J$, peuvent être exprimés par récurrence comme suit :

$$\Delta'_1 = 0,$$

$$\Delta'_{i+1} = \Delta'_i + \Delta_{i+1}, \text{ pour } 1 \leq i \leq J-1.$$

<u>f) Etape 25 de filtrage des décalages longitudinaux</u>

Comme pour les décalages latéraux cumulés, les décalages longitudinaux cumulés $\Delta'_i$, $1 \leq i \leq J$, sont filtrés au moyen d'un filtre coupe-bas.

De préférence, le filtre est un filtre passe-bande.

De préférence, la filtre utilisé est le même que pour le filtrage des décalages latéraux cumulés, défini par la même fréquence de coupure basse $f_{min}$ et, le cas échéant, la même fréquence de coupure haute $f_{max}$.

Les décalages longitudinaux cumulés après filtrage des images lignes $L_i$ sont désignés par $\Delta''_i$, $1 \leq i \leq J$.

Tel qu'indiqué précédemment, l'étape 25 de filtrage est indifféremment exécutée préalablement, simultanément, ou postérieurement à l'étape 24 d'intégration des décalages longitudinaux.

<u>g) Remarques complémentaires</u>

Dans un mode particulier de mise en oeuvre, on procède à au moins une itération supplémentaire des différentes étapes du procédé d'estimation, en appliquant à nouveau le procédé d'estimation à des images lignes corrigées des décalages estimés au cours de l'itération précédente du procédé d'estimation.

De manière plus générale, on notera que les différentes étapes du procédé d'estimation selon l'invention, en particulier l'étape 20 d'estimation des décalages latéraux relatifs et/ou l'étape 23 d'estimation des décalages longitudinaux relatifs, peuvent être mises en oeuvre sur des sous-ensembles de pixels des images lignes $L_i$, $1 \leq i \leq J$.

Suivant une variante, la sélection de ce sous-ensemble est arbitraire, et vise principalement à réduire le nombre de calculs nécessaires, en particulier des calculs d'extrapolation des images lignes sur les bords pour calculer les valeurs de ressemblance. Par exemple il est possible de ne garder que les $N-K_1-K_2$ pixels centraux, définis pour toutes les valeurs de translation latérale k dans $[-K_1 ; K_2]$.

Suivant une autre variante, la sélection s'effectue suivant un critère de contenu de la scène. Par exemple, on pourra sélectionner un ou plusieurs sous-ensembles de pixels de préférence adjacents, d'indices {n1, n2, ..., nA}, A étant inférieur à N, pour lequel le contenu présente une variance supérieure à un seuil donné, ou bien pour lequel le contenu présente la variance maximale, la variance étant par exemple calculée suivant l'expression :

$$\Sigma_i \left( \Sigma_{n' \in \{n1,...,nA\}} |L_i(n')|^2 - \Sigma_{n \in \{n1,...,nA\}} |L_i(n)|^2| \right).$$

<u>Procédé de formation d'images composées</u>

La présente invention concerne également un procédé de formation d'une image composée à partir d'images lignes $L_i$, $1 \leq i \leq J$, présentant des décalages latéraux et/ou longitudinaux, acquises préalablement par un capteur 10 à défilement embarqué dans un véhicule survolant la Terre.

Dans un mode préféré de mise en oeuvre, le procédé de formation comporte principalement les étapes suivantes, représentées sur la figure 6 :

- une étape 30 d'estimation des décalages des images lignes $L_i$,
- une étape 31 de correction des décalages estimés,
- une étape 32 de juxtaposition des images lignes corrigées.

L'étape 30 d'estimation des décalages des images lignes met en oeuvre le procédé d'estimation selon l'invention pour déterminer les décalages latéraux et/ou longitudinaux des images lignes $L_i$, $1 \le i \le J$. Dans la suite de l'exposé, on considère de manière non limitative le cas où à la fois les décalages latéraux et longitudinaux sont estimés et corrigés.

De préférence, le procédé d'estimation est mis en oeuvre pour estimer les décalages cumulés après filtrage, c'est-à-dire les décalages latéraux $\delta''_i$ et les décalages longitudinaux $\Delta''_i$, $1 \le i \le J$.

Une fois les décalages latéraux et longitudinaux estimés, les images lignes $L_i$, $1 \le i \le J$, sont corrigées au cours de l'étape 31 de correction.

La correction s'effectue de préférence en deux temps :

- avantageusement d'abord une correction des décalages latéraux,
- puis une correction des décalages longitudinaux.

La correction des décalages latéraux s'effectue par ré-échantillonnage des images lignes $L_i$, $1 \le i \le J$. Tel que décrit précédemment, le ré-échantillonnage s'effectue par exemple par interpolation, et s'accompagne, le cas échéant, d'une extrapolation sur les bords.

L'image ligne $L'_i$ après correction du décalage latéral correspond à l'image ligne $L_i[\delta''_i]$, $1 \le i \le J$.

La correction des décalages longitudinaux s'effectue en ré-échantillonnant chaque colonne $L'_i(n)$ ($1 \le i \le J$) d'indice n de l'image composée, $1 \le n \le N$ (une colonne étant considérée mathématiquement ici comme une fonction). Ce ré-échantillonnage s'effectue en mettant en oeuvre des procédés d'interpolation connus de l'homme de l'art, tel qu'une interpolation cubique, de Shannon tronquée, ou utilisant des splines, etc.

Ainsi, pour un indice n donné, les valeurs des pixels $L'_i(n)$ ($1 \le i \le J$) correspondent en réalité aux valeurs pour des indices $(i+\Delta''_i)$, $1 \le i \le J$, du fait des décalages longitudinaux. Pour la juxtaposition, lesdites valeurs des pixels doivent être ramenées aux indices i, $1 \le i \le J$. Par exemple, on calcule une fonction $L'_y(n)$, par interpolation des valeurs des pixels $L'_i(n)$, considérés d'indices $(i+\Delta''_i)$ ($1 \le i \le J$), pour des valeurs de y réelles comprises dans l'intervalle $[1 ; J]$, et, si nécessaire, par extrapolation pour des valeurs de y en dehors de l'intervalle $[1 ; J]$. Les valeurs des pixels de la colonne d'indice n, aux indices i, $1 \le i \le J$, désignées par $L''_i(n)$, sont déterminées comme étant les valeurs prises par la fonction $L'_y(n)$ pour y égal à i, $1 \le i \le J$. Les valeurs $L''_i(n)$, $1 \le n \le N$, constituent l'image ligne d'indice i après correction du décalage longitudinal $\Delta''_i$.

L'étape 32 suivante consiste à juxtaposer les images lignes ainsi corrigées pour former l'image composée.

Dans une variante du procédé de formation selon l'invention, non représentée sur les figures, les décalages latéraux et longitudinaux estimés au cours de l'étape 30 sont utilisés pour estimer les décalages latéraux et longitudinaux d'un second jeu d'images lignes, acquises par une ligne de cellules sensibles d'un second capteur embarqué dans le même véhicule que le premier capteur 10, dans l'hypothèse où le second capteur est soumis sensiblement aux mêmes vibrations que le premier capteur 10 (ce qui est généralement le cas lorsqu'ils sont co-localisés et/ou que leurs plans focaux sont confondus).

Le procédé de formation comporte dans ce cas une étape de conversion des décalages estimés, visant à déterminer un second jeu de décalages latéraux et longitudinaux pour le second jeu d'images lignes à partir de ceux estimés pour le premier jeu d'images lignes $L_i$, $1 \le i \le J$.

L'étape de conversion consiste par exemple à restituer les rotations en roulis et en tangage à l'origine des décalages du premier jeu d'images lignes $L_i$, $1 \le i \le J$, puis à déterminer, en fonction desdites rotations en roulis et en tangage, les décalages induits au niveau du second capteur. Ces opérations mettent en oeuvre des calculs trigonométriques connus de l'homme de l'art, et tiennent notamment compte de l'altitude du véhicule par rapport à la surface S de la Terre, des dimensions du premier capteur 10 et du second capteur, etc.

Une fois les décalages du second jeu d'images lignes déterminés, une image composée est formée en exécutant l'étape 31 de correction et l'étape 32 de juxtaposition pour respectivement la correction et la juxtaposition des images lignes du second jeu.

Il est à noter que le procédé de formation selon l'invention comporte suivant d'autres modes de mise en oeuvre des étapes additionnelles, telles que des étapes visant à corriger l'image composée en tout ou partie des effets de distorsion géométrique introduits par les mouvements basse fréquence du véhicule et/ou de la ligne de visée. De tels mouvements basse fréquence sont par exemple estimés à partir de moyens conventionnels, comme par exemple des capteurs présents à bord du véhicule (capteurs de position, de vitesse, d'accélération linéaire et angulaire) et/ou l'utilisation d'amers (points reconnaissables dont la position à la surface de la Terre est connue).

La présente invention trouve une application particulièrement avantageuse dans le domaine de l'exploitation d'images obtenues par des capteurs à défilement embarqués dans des véhicules survolant la Terre. En particulier, l'invention autorise, par un traitement en temps réel ou en temps différé approprié, la correction de déformations géométriques, dans une image composée, induites par des vibrations hautes fréquences du capteur au cours de l'acquisition d'images lignes formant ladite image composée.

En particulier, l'invention permet d'estimer le décalage latéral et/ou longitudinal entre des images lignes différentes d'une même image composée, sans qu'il soit nécessaire, comme c'est le cas dans l'art antérieur, de disposer d'au moins deux images composées représentant la même portion de la scène observée.

**Revendications**

1. Procédé d'estimation de décalages d'images lignes d'une image, dite « image composée », constituée par la juxtaposition de J images lignes, dans lequel :

   - les images lignes représentent une scène à la surface (S) d'un corps céleste, acquises successivement par une ligne de cellules sensibles d'un capteur (10) embarqué dans un véhicule survolant ledit corps céleste, chaque image ligne étant constituée d'une pluralité de pixels,
   - une image ligne $L_j$, $1 \leq j \leq J$, présente un décalage latéral et/ou longitudinal entre la position que l'image ligne $L_j$ est destinée à occuper dans l'image composée et la position qu'elle devrait occuper du fait d'une erreur de visée du capteur (10) au cours de l'acquisition de l'image ligne $L_j$,
   ledit procédé étant **caractérisé en ce que** les images lignes représentent des portions différentes de la scène, et que le décalage latéral et/ou longitudinal d'une image ligne $L_j$, relativement à une image ligne $L_i$, j différent de i, est estimé en fonction d'un modèle local de variation latérale et/ou longitudinale de la ressemblance entre images lignes différentes.

2. Procédé d'estimation selon la revendication 1, dans lequel le modèle local de variation latérale et/ou longitudinale de la ressemblance entre images lignes différentes est déterminé par calcul de valeurs de ressemblance entre des images lignes différentes de l'image composée.

3. Procédé d'estimation selon la revendication 2, comportant une étape (20) d'estimation du décalage latéral relatif $\delta_j$ de l'image ligne $L_j$ relativement à l'image ligne $L_i$, au cours de laquelle le modèle local de variation latérale de ressemblance entre images lignes successives est déterminé en calculant des valeurs de ressemblance de l'image ligne $L_j$ avec l'image ligne $L_i$ pour une pluralité de valeurs de translation latérale d'une ligne par rapport à l'autre, le décalage latéral relatif $\delta_j$ étant estimé comme étant la translation latérale pour laquelle la valeur du modèle de variation latérale de ressemblance est maximale.

4. Procédé d'estimation selon la revendication 3, dans lequel le décalage latéral relatif $\delta_j$ de l'image ligne $L_j$, relativement à une image ligne $L_i$, est un nombre entier relatif ou un nombre réel de pixels.

5. Procédé d'estimation selon la revendication 3 ou 4, comportant une étape (21) d'intégration des décalages latéraux relatifs $\delta_j$ d'images lignes successives, pour déterminer des décalages latéraux cumulés $\delta'_j$ par rapport à une image ligne de référence de l'image composée.

6. Procédé d'estimation selon la revendication 5, comportant une étape (22) de filtrage coupe-bas des décalages latéraux relatifs $\delta_j$ ou cumulés $\delta'_j$.

7. Procédé d'estimation selon l'une des revendications 2 à 6, comportant une étape (23) d'estimation du décalage longitudinal relatif $\Delta_j$ de l'image ligne $L_j$ relativement à l'image ligne $L_i$, au cours de laquelle on calcule une valeur de ressemblance de l'image ligne $L_j$ et de l'image ligne $L_i$, et on estime le décalage longitudinal relatif $\Delta_j$ en fonction de l'écart longitudinal correspondant, d'après le modèle local de variation longitudinale de ressemblance, à ladite valeur de ressemblance de l'image ligne $L_j$ et de l'image ligne $L_i$.

8. Procédé d'estimation selon la revendication 7, dans lequel, lorsque des décalages latéraux ont été préalablement estimés, l'étape (23) d'estimation du décalage longitudinal relatif $\Delta_j$ est appliquée à des images lignes $L'_j$ au lieu des images lignes $L_j$, $1 \leq j \leq J$, lesdites images lignes $L'_j$ correspondant aux images lignes $L_j$ après correction desdits décalages latéraux estimés.

9. Procédé d'estimation selon la revendication 7 ou 8, dans lequel le modèle local de variation longitudinale de ressemblance entre images lignes successives est calculé, pour un écart longitudinal théorique donné entre deux images lignes, en moyennant des valeurs de ressemblance calculées pour une pluralité de paires d'images lignes de l'image composée espacées dudit écart longitudinal théorique donné.

10. Procédé d'estimation selon la revendication 9, dans lequel le modèle local de variation longitudinale de ressemblance entre images lignes successives est calculé entre les écarts longitudinaux théoriques par interpolation en fonction des valeurs calculées pour les écarts longitudinaux théoriques.

11. Procédé d'estimation selon l'une des revendications 7 à 10, comportant une étape (24) d'intégration des décalages longitudinaux relatifs $\Delta_j$ d'images lignes successives pour déterminer des décalages longitudinaux cumulés $\Delta'_j$ par rapport à une image ligne de référence de l'image composée.

12. Procédé d'estimation selon la revendication 11, comportant une étape (25) de filtrage coupe-bas des décalages longitudinaux relatifs ou cumulés.

13. Procédé d'estimation selon l'une des revendications précédentes, dans lequel les étapes du procédé d'estimation sont itérées au moins une fois.

14. Procédé de formation d'images composées à partir d'images lignes présentant des décalages, **caractérisé en ce qu'**il comporte au moins :

   - une étape (30) d'estimation des décalages des images lignes mettant en oeuvre le procédé d'estimation selon l'une des revendications précédentes,
   - une étape (31) de correction des décalages estimés sur les images lignes,
   - une étape (32) de juxtaposition des images lignes corrigées.

15. Procédé de formation d'images composées à partir d'images lignes présentant des décalages, **caractérisé en ce qu'**il comporte :

   - une étape (30) d'estimation des décalages d'un premier jeu d'images lignes acquises par un premier capteur (10), mettant en oeuvre le procédé d'estimation selon l'une des revendications 1 à 13,
   - une étape de conversion des décalages estimés en un second jeu de décalages pour un second jeu d'images lignes, acquises par un second capteur embarqué dans le véhicule et soumis sensiblement aux mêmes erreurs de visée que le premier capteur (10),
   - une étape (31) de correction du second jeu de décalages sur le second jeu d'images lignes,
   - une étape (32) de juxtaposition du second jeu d'images lignes corrigées.

## Patentansprüche

1. Verfahren zur Schätzung von Verschiebungen von Zeilenbildern eines Bilds, « zusammengesetztes Bild » genannt, das aus der Aneinanderreihung von J Zeilenbildern besteht, wobei:

   - die Zeilenbilder eine Szene an der Oberfläche (S) eines Himmelskörpers darstellen und nacheinander von einer Reihe von empfindlichen Zellen eines Sensors (10) an Bord eines den Himmelskörper überfliegenden Fahrzeugs erfasst werden, wobei jedes Zeilenbild aus einer Vielzahl von Pixeln besteht,
   - ein Zeilenbild $L_j$, $1 \leq j \leq J$, eine laterale und/oder longitudinale Verschiebung zwischen der Position, die das Zeilenbild $L_j$ im zusammengesetzten Bild einnehmen soll, und der Position aufweist, die es aufgrund eines Peilfehlers des Sensors (10) während der Erfassung des Zeilenbilds $L_j$ einnehmen sollte,
   wobei das Verfahren **dadurch gekennzeichnet ist, dass** die Zeilenbilder verschiedene Abschnitte der Szene darstellen, und dass die laterale und/oder longitudinale Verschiebung eines Zeilenbilds $L_j$ bezüglich eines Zeilenbilds $L_i$, wobei j sich von i unterscheidet, abhängig von einem lokalen Modell lateraler und/oder longitudinaler Ähnlichkeitsvariation zwischen verschiedenen Zeilenbildern geschätzt wird.

2. Schätzverfahren nach Anspruch 1, wobei das lokale Modell lateraler und/oder longitudinaler Ähnlichkeitsvariation zwischen unterschiedlichen Zeilenbildern durch Berechnung von Ähnlichkeitswerten zwischen unterschiedlichen Zeilenbildern des zusammengesetzten Bilds bestimmt wird.

3. Schätzverfahren nach Anspruch 2, das einen Schritt (20) der Schätzung der relativen lateralen Verschiebung $\delta_j$ des Zeilenbilds $L_j$ bezüglich des Zeilenbilds $L_i$ aufweist, während dem das lokale Modell lateraler Ähnlichkeitsvariation zwischen aufeinanderfolgenden Zeilenbildern durch Berechnen von Ähnlichkeitswerten des Zeilenbilds $L_j$ mit dem Zeilenbild $L_i$ für eine Vielzahl von Werten lateraler Translation einer Zeile bezüglich der anderen bestimmt wird, wobei die relative laterale Verschiebung $\delta_j$ als die laterale Translation geschätzt wird, für die der Wert des Modells lateraler Ähnlichkeitsvariation maximal ist.

4. Schätzverfahren nach Anspruch 3, wobei die relative laterale Verschiebung $\delta_j$ des Zeilenbilds $L_j$ bezüglich eines Zeilenbilds $L_i$ eine relative ganze Zahl oder eine reale Anzahl von Pixeln ist.

5. Schätzverfahren nach Anspruch 3 oder 4, das einen Schritt (21) der Integration der relativen lateralen Verschiebungen $\delta_j$ aufeinanderfolgender Zeilenbilder aufweist, um kumulierte laterale Verschiebungen $\delta'_j$ bezüglich eines Bezugszeilenbilds des zusammengesetzten Bilds zu bestimmen.

6. Schätzverfahren nach Anspruch 5, das einen Schritt (22) der Low-Cut-Filterung der relativen $\delta_j$ oder kumulierten lateralen Verschiebungen $\delta'_j$ aufweist.

7. Schätzverfahren nach einem der Ansprüche 2 bis 6, das einen Schritt (23) der Schätzung der relativen longitudinalen Verschiebung $\Delta_j$ des Zeilenbilds $L_j$ bezüglich des Zeilenbilds $L_i$ aufweist, während dem ein Ähnlichkeitswert des Zeilenbilds $L_j$ und des Zeilenbilds $L_i$ berechnet wird, und die relative longitudinale Verschiebung $\Delta_j$ abhängig vom entsprechenden longitudinalen Abstand, gemäß dem lokalen Modell longitudinaler Ähnlichkeitsvariation, zum Ähnlichkeitswert des Zeilenbilds $L_j$ und des Zeilenbilds $L_i$ geschätzt wird.

8. Schätzverfahren nach Anspruch 7, wobei, wenn laterale Verschiebungen vorab geschätzt wurden, der Schritt (23) der Schätzung der relativen longitudinalen Verschiebung $\Delta_j$ an Zeilenbilder $L'_j$ anstelle der Zeilenbilder $L_j$, $1 \leq j \leq J$, angewendet wird, wobei die Zeilenbilder $L'_j$ den Zeilenbildern $L_j$ nach Korrektur der geschätzten lateralen Verschiebungen entsprechen.

9. Schätzverfahren nach Anspruch 7 oder 8, wobei das lokale Modell longitudinaler Ähnlichkeitsvariation zwischen aufeinanderfolgenden Zeilenbildern für einen gegebenen theoretischen longitudinalen Abstand zwischen zwei Zeilenbildern durch Mittelung von für eine Vielzahl von um den gegebenen theoretischen longitudinalen Abstand beabstandeten Paaren von Zeilenbildern des zusammengesetzten Bilds berechnet wird.

10. Schätzverfahren nach Anspruch 9, wobei das lokale Modell longitudinaler Ähnlichkeitsvariation zwischen aufeinanderfolgenden Zeilenbildern zwischen den theoretischen longitudinalen Abständen durch Interpolation abhängig von den für die theoretischen longitudinalen Abstände berechneten Werten berechnet wird.

11. Schätzverfahren nach einem der Ansprüche 7 bis 10, das einen Schritt (24) der Integration der relativen longitudinalen Verschiebungen $\Delta_j$ aufeinanderfolgender Zeilenbilder aufweist, um kumulierte longitudinale Verschiebungen $\Delta'_j$ bezüglich eines Bezugszeilenbilds des zusammengesetzten Bilds zu bestimmen.

12. Schätzverfahren nach Anspruch 11, das einen Schritt (25) der Low-Cut-Filterung der relativen oder kumulierten longitudinalen Verschiebungen aufweist.

13. Schätzverfahren nach einem der vorhergehenden Ansprüche, wobei die Schritte des Schätzverfahrens mindestens einmal wiederholt werden.

14. Verfahren zur Bildung von zusammengesetzten Bildern ausgehend von Verschiebungen aufweisenden Zeilenbildern, **dadurch gekennzeichnet, dass** es mindestens aufweist:

- einen Schritt (30) der Schätzung der Verschiebungen der Zeilenbilder unter Verwendung des Schätzverfahrens nach einem der vorhergehenden Ansprüche,
- einen Schritt (31) der Korrektur der geschätzten Verschiebungen in den Zeilenbildern,
- einen Schritt (32) der Aneinanderreihung der korrigierten Zeilenbilder.

15. Verfahren zur Bildung von zusammengesetzten Bildern ausgehend von Verschiebungen aufweisenden Zeilenbildern, **dadurch gekennzeichnet, dass** es aufweist:

- einen Schritt (30) der Schätzung der Verschiebungen eines von einem ersten Sensor (10) erfassten ersten Satzes von Zeilenbildern unter Verwendung des Schätzverfahrens nach einem der Ansprüche 1 bis 13,
- einen Schritt der Umwandlung der geschätzten Verschiebungen in einen zweiten Satz von Verschiebungen für einen zweiten Satz von Zeilenbildern, die von einem zweiten Sensor erfasst werden, der sich an Bord des Fahrzeugs befindet und im Wesentlichen den gleichen Peilfehlern unterliegt wie der erste Sensor (10),
- einen Schritt (31) der Korrektur des zweiten Satzes von Verschiebungen im zweiten Satz von Zeilenbildern,
- einen Schritt (32) der Aneinanderreihung des zweiten Satzes von korrigierten Zeilenbildern.

**Claims**

1. Method for estimating shifts of line images of an image, referred to as a "composite image", made up of the juxtaposition of J line images, in which:

   - the line images show portions of a scene on the surface (S) of a celestial body successively acquired by a row of sensitive cells of a sensor (10) on board a vehicle flying over said celestial body, each line image being composed of a plurality of pixels,
   - a line image $L_j$, where $1 \le j \le J$, presents a lateral and/or longitudinal shift between the position that line image $L_j$ is destined to occupy in the composite image and the position it should occupy, because of a sighting error of the sensor (10) during the acquisition of line image $L_j$,
   said method being **characterized in that** the line images show different portions of the scene, and **in that** the lateral and/or longitudinal shift of a line image $L_j$ relative to a line image $L_i$, where j is different from i, is estimated according to a local model of lateral and/or longitudinal variation of the similarity between different line images.

2. Estimation method according to claim 1, in which the local model of lateral and/or longitudinal variation of the similarity between different line images is determined by calculating similarity values between different line images of the composite image.

3. Estimation method according to claim 2, comprising a step (20) of estimating the relative lateral shift $\delta_j$ of line image $L_j$ relative to line image $L_i$, during which the local model of lateral variation of the similarity between successive line images is determined by calculating similarity values of line image $L_j$ to line image $L_i$ for a plurality of lateral translation values of one line relative to the other; the relative lateral shift $\delta_j$ is estimated as the lateral translation for which the value of the model of lateral variation of the similarity is maximum.

4. Estimation method according to claim 3, in which the relative lateral shift $\delta_j$ of line image $L_j$, relative to a line image $L_i$, is a relative integer number or a real number of pixels.

5. Estimation method according to claim 3 or 4, comprising a step (21) of integrating relative lateral shifts $\delta_j$ in successive line images, for determining cumulative lateral shifts $\delta'_j$ with respect to a reference line image of the composite image.

6. Estimation method according to claim 5, comprising a step (22) of low-cut filtering of relative lateral shifts $\delta_j$ or cumulative lateral shifts $\delta'_j$.

7. Estimation method according to one of claims 2 to 6, comprising a step (23) of estimating the relative longitudinal shift $\Delta_j$ of line image $L_j$ relative to line image $L_i$, during which a similarity value is calculated for line image $L_j$ and line image $L_i$, and the relative longitudinal shift $\Delta_j$ is estimated according to the longitudinal gap corresponding, based on the local model of longitudinal variation of the similarity, to said similarity value for line image $L_j$ and line image $L_i$.

8. Estimation method according to claim 7, in which when lateral shifts have already been estimated, the step (23) estimating the relative longitudinal shift $\Delta_j$ is applied to line images $L'_j$ instead of line images $L_j$, where $1 \le j \le J$, said line images $L'_j$ corresponding to lines images $L_j$ after said estimated lateral shifts have been corrected.

9. Estimation method according to claim 7 or 8, in which the local model of longitudinal variation of the similarity between successive line images is calculated, for a given theoretical longitudinal gap between two line images, by averaging similarity values calculated for a plurality of pairs of line images of the composite image separated by said given theoretical longitudinal gap.

10. Estimation method according to claim 9, in which the local model of longitudinal variation of the similarity between successive line images is calculated between the theoretical longitudinal gaps by interpolation according to values calculated for the theoretical longitudinal gaps.

11. Estimation method according to one of claims 7 to 10, comprising a step (24) of integrating relative longitudinal shifts $\Delta_j$ in successive line images for determining cumulative longitudinal shifts $\Delta'_j$ with respect to a reference line image of the composite image.

12. Estimation method according to claim 11, comprising a step (25) of low-cut filtering of relative or cumulative longitudinal shifts.

13. Estimation method according to one of the preceding claims, in which the steps of the estimation method are iterated at least once.

14. Method for forming composite images using line images with shifts, **characterized in that** it comprises at least:

- a step (30) of estimating shifts of line images utilizing the method for estimating shifts according to one of the preceding claims,
- a step (31) of correcting estimated shifts of the line images,
- a step (32) of juxtaposing corrected line images.

15. Method for forming composite images using line images with shifts, **characterized in that** it comprises:

- a step (30) of estimating shifts of a first set of line images acquired by a first sensor (10), utilizing the estimation method according to one of claims 1 to 13,
- a step of converting estimated shifts in a second set of shifts for a second set of line images, acquired by a second sensor on board the vehicle and substantially subjected to the same sighting errors as the first sensor (10),
- a step (31) of correcting the second set of shifts of the second set of line images,
- a step (32) of juxtaposing the second set of corrected line images.

**Fig. 1**

**Fig. 2**

$L_i, L_{i+1}$

| | |
|---|---|
| 20 — estimation décalage latéral | estimation décalage longitudinal — 23 |
| $\delta_{i+1}$ | $\Delta_{i+1}$ |
| 21 — intégration décalage latéral | intégration décalage longitudinal — 24 |
| $\delta'_{i+1}$ | $\Delta'_{i+1}$ |
| 22 — filtrage décalage latéral | filtrage décalage longitudinal — 25 |
| $\delta''_{i+1}$ | $\Delta''_{i+1}$ |

231

$\delta''_{i+1}$

**Fig. 3**

**Fig. 4**

$R^{lat}_i$

max

-3  -2  -1  0  1  2  3  k

$\delta_{i+1}$

$R^{long}_i$

Vo

1  2  3  m

$\Delta_{i+1}$  Mo

**Fig. 5**

$L_i$

30 — estimation décalages

$\delta''_i, \Delta''_i$

31 — correction décalages

$L''_i$

32 — juxtaposition

**Fig. 6**

19

## RÉFÉRENCES CITÉES DANS LA DESCRIPTION

**Documents brevets cités dans la description**

- FR 2899344
- US 2008031528 A